Europäisches Patentamt

European Patent Office

Office européen des brevets

(19)

(11) Publication number: **0 179 121**
**B1**

# (12) EUROPEAN PATENT SPECIFICATION

(45) Date of publication of the patent specification:
**15.07.87**

(51) Int. Cl.⁴: **B 60 R 22/38**

(21) Application number: **85902193.3**

(22) Date of filing: **12.04.85**

(86) International application number:
**PCT/SE 85/00170**

(87) International publication number:
**WO 85/04629 (24.10.85 Gazette 85/23)**

(54) **DEVICE FOR ACCURATE TIME CONTROL OF A LOCKING MEANS IN A VEHICLE SAFETY BELT.**

(30) Priority: **13.04.84 SE 8402095**

(43) Date of publication of application:
**30.04.86 Bulletin 86/18**

(45) Publication of the grant of the patent:
**15.07.87 Bulletin 87/29**

(84) Designated Contracting States:
**DE FR GB**

(56) References cited:
**SE - A - 8 304 319**
**SE - B - 334 552**
**SE - C - 211 626**
**US - A - 3 915 405**

(73) Proprietor: **AUTOLIV DEVELOPMENT AKTIEBOLAG,**
**P.O. Box 124, S-447 00 Vargarda (SE)**

(72) Inventor: **ANDERSSON, Tommy, Fyrmästarvägen 15,**
**S-441 50 Alingsas (SE)**
Inventor: **SJÖGREN, Bernt, Kommendörsgatan 21E,**
**S-414 59 Göteborg (SE)**

(74) Representative: **Frankland, Nigel Howard et al,**
**FORRESTER & BOEHMERT Widenmayerstrasse 4/I,**
**D-8000 München 22 (DE)**

## Description

The present invention is related to a device for the accurate time control or synchronisation of a locking means in a vehicle safety belt arrangement having a band which can be extracted from a reel, extraction of the band causing a rotatably mounted shaft to rotate. The shaft is provided with a number of evenly spaced stop teeth, and the locking means is adapted to be guided into the path traversed by the stop teeth as the shaft rotates in response to the operation of a band or vehicle sensitive means, to come into engagement with a stop tooth of the shaft to lock the shaft. Thus no more of the band of the safety belt can be extracted.

Vehicle safety belt arrangements in which a band of a safety belt is arranged to be automatically coiled on a rotatably mounted shaft when the safety belt is not used, and to be uncoiled from the shaft when the seat belt is fastened have been proposed previously. In devices of this type the shaft on which the band is coiled must be locked in case of danger, so that the safety belt can provide the person embraced by the belt with the intended protection. This locking is generally provided by means of a toothed wheel rigidly attached to the shaft and a movable locking means arranged to be moved into the path traversed by the teeth, as the wheel rotates, to come into engagement with the teeth, so that the rotation of the shaft is prevented. The operation of the locking means is generally controlled by a band or vehicle sensitive inertia means, so that the locking effect is provided when the band is extracted rapidly or when the vehicle is subject to a large change of speed or direction.

In order to make the locking as efficient and as fast as possible, the locking means must enter into a space between two teeth of the wheel, as the wheel rotates. If the locking means approaches the wheel in such a way that it comes into contact with a tooth before the locking means has reached its locking position, there is a considerable risk that the locking means will bounce outwardly, and will have to be moved towards the wheel again, thus delaying the locking operation. If the locking means repeatedly bounces against the teeth of the wheel, the locking may be delayed to such an extent that the safety belt does not provide the intended protection.

Therefore, it is necessary to co-ordinate or synchronise the movement of the locking means with the movement of the teeth, so that the locking means always enters into a space between two successive teeth when locking is effected.

Many mechanical devices are known in which the movements of the locking means are synchronized with the rotating wheel in this way. However, in these devices there are generally primary locking means designed to take up the forces appearing during the locking operation, and secondary locking means only intended to bring the primary locking means into engagement. The secondary locking means normally comprise only a clutch between the rotatably mounted shaft and the primary locking means, so that the shaft, when turned in the extraction direction of the band, forces the locking means to the engagement position. The secondary locking means generally comprise a toothed wheel that can be turned on the rotatably mounted shaft and that can be actuated by a band and/or vehicle sensitive inertia means, as has been disclosed in the Swedish Patent Application No. 8206364-5, published 10th May 1984. Generally, also in the secondary locking operation a locking means is used which has to be brought into engagement with a tooth of a rotating toothed wheel, and in this case there is a risk that the locking means may bounce against the teeth, so that the locking is delayed.

No device for synchronisation of the secondary locking means is in use to-day, but several designs have been suggested. However, these designs have been difficult or expensive to realise.

The main object of the invention is to provide a device for the accurate time control or synchronisation of a locking means in a safety belt of the type set forth above, as well as in the first portion of Claim 1, so that a primary locking means can be synchronised with stop teeth on the rotatably mounted shaft in an easy way.

According to this invention there is provided a device for the accurate time control or synchronisation of a locking means in a vehicle safety belt having an extractable band which causes a rotatably mounted shaft to rotate during the extraction of the band, the shaft being provided with a number of evenly spaced stop teeth and the locking means being adapted to be moved into the path traversed by the stop teeth in response to the operation of a band and/or vehicle sensitive means to engage with one of the stop teeth of the shaft for locking the shaft, so that the band of the safety belt can not be extracted, wherein the rotatably mounted shaft is provided with a sequence of marks which are equally spaced from each other along a circle concentric with the shaft and which are arranged to be read by a reading head during the rotation of the shaft, and wherein an electric circuit is provided adapted to receive signals from the reading head to enable activation of the locking means only at the times when the point where the locking means is to be entered into the path traversed by the stop teeth lies in a space between two stop teeth, so that the locking means when activated always enters into a space between two successive stop teeth.

Preferably the shaft is provided with at least one mark for each space between the stop teeth of the shaft. Conveniently the shaft, for each space between the stop teeth of the shaft, is provided with a mark indicating when the beginning of the space passes the point where the locking means is to be entered into the path traversed by the stop teeth and a mark indicating when the end of the space passes the entering point.

Preferably, the marks are arranged on a disk rigidly attached to the rotatably mounted shaft.

Alternatively, the marks are provided on the rotatably mounted shaft.

Advantageously, the marks are formed by areas having permanent magnetization or are formed by areas that are optically readable.

Preferably, the marks have an extension along the path traversed by the teeth corresponding to the space between two adjacent stop teeth and the reading head is arranged to sense the beginning and the end of each mark.

Conveniently, the marks are arranged to be read with a time lead corresponding to the time required to activate the locking means and to move its engagement end to the path traversed by the stop teeth, so that the locking means can be entered into the path traversed by the stop teeth and into the space between two stop teeth.

Preferably, the rotatably mounted shaft is provided with further marks arranged to be read by a reading head for indicating the rotary speed and/or acceleration of the rotatably mounted shaft.

Since the rotatably mounted shaft is provided with a sequence of marks equally spaced from each other on a circle concentric with the shaft, and the marks are arranged to be read by a reading head during the rotation of the shaft, it is possible to synchronise the locking means with the stop teeth of the shaft in an easy and efficient way, so that the locking means always enters into a space between two successive stop teeth. This will make the locking operation more reliable and faster, so that only a short length of band is extracted from the shaft, before the shaft is locked. This means that the safety belt will become more reliable. Due to the fact that the reading head delivers signals to an electric circuit, the locking means can be directly controlled in an electric way, so that no secondary locking means is required. This means that fewer mechanical parts are required and that leads to less mechanical friction and, thus, to a more reliable operation at fixed limit values. Due to the fact that fewer mechanical parts are required, the outer size of the device can be made smaller and the sound level created during operation of the device can possibly be kept lower.

Due to the fact that the marks are provided on the shaft or on a disk attached to the shaft, the device can also be used for sensing the rotary speed and/or the acceleration of the shaft, so that the device can also be used for controlling the locking means depending upon the extraction of the band. However, in the last mentioned case it is preferable to use two types of marks.

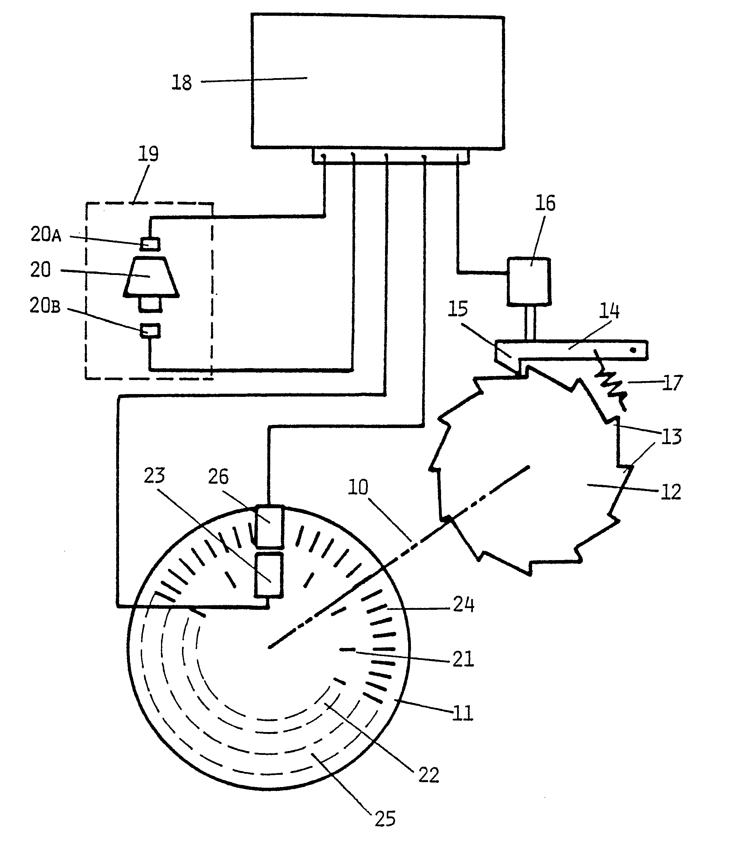

One embodiment of the device according to the invention will now be further described below with reference to the accompanying drawing which schematically shows a rotatably mounted shaft with a disk provided with marks and a locking device for the shaft.

The device shown in the Figure comprises a rotatably mounted shaft 10 upon which a band of the safety belt can be coiled automatically. The band of the safety belt and the mechanical means for the automatic coiling of the band on the shaft are not illustrated or described, because these parts are of a conventional type.

A control disk 11 and a toothed wheel 12 are rigidly attached to the shaft 10 and thus are adapted to rotate together with the shaft, when the band is extracted from or coiled on the shaft. The toothed wheel 12 is of a conventional type and is provided with a number of teeth 13 which are equally spaced from each other along the rim of the wheel. A pivoted latch 14 is positioned adjacent the toothed wheel and its tip 15 is designed to co-operate with the teeth 13 of the wheel for locking the shaft 10. The latch is controlled by means of a solenoid 16 adapted to keep the latch in a neutral or release position in which the tip 15 of the latch is outside the path traversed by the teeth 13 of the wheel, when current flows through the solenoid. The latch is provided with a spring 17 adapted to move the latch towards the teeth of the wheel, when no current flows through the solenoid, so that the toothed wheel 12 and, consequently, the shaft 10 may be locked, when no current is supplied to the solenoid. The solenoid is controlled by means of an electric circuit 18, the operation of which will be further explained below.

The electric circuit 18 is connected to a control means 19 comprising an inertia body 20 which senses the movements of the vehicle in which the safety belt is fitted and which can be either in a neutral or release position or in a locking position. The vehicle sensitive inertia body 20 may be of a conventional type and may be adapted to control an electric contactor of the type that is shown in Swedish Patent Application 8402093-2 published 14th October 1985 and that is provided with optical sensing means 20A and 20B for indication of the position of the inertia body.

The disk 11, which is rigidly attached to the shaft 10 as mentioned above, is provided with a number of marks 21 which are equally spaced from each other along a circle 22 which is concentric with the shaft 10. The marks 21 are arranged to be read by a reading head 23, when the shaft 10 and the disk 11 rotate during the extraction of band from the shaft. The reading head 23 is positioned adjacent the path traversed by the marks and is connected to the electric circuit 18.

The number of marks 21 is equal to the number of teeth 13 of the wheel 12. The marks are arranged to indicate the position of the teeth on the wheel.

The disk 11 is further provided with a number of marks 24 equally spaced from each other along a circle 25 which is concentric with the shaft 10 and has a larger diameter than the circle 22. The marks are arranged to be read by a reading head 26, when the disk 11 rotates. The reading head 26 is positioned adjacent the path traversed by the marks 24 and is connected to the electric circuit 18.

The marks 24 are thin and are positioned close to each other along the circle 25, so that the number of marks 24 is several times larger than the number of teeth 13 on the wheel 12. Thus, several marks 24 correspond to each space between two teeth on the wheel. The number of marks 24 is a multiple of the number of teeth, so that each space between two teeth on the wheel corresponds to the same number of marks.

The marks 21 and 24 are formed by optically or magnetically readable indicia or lines.

The disclosed device operates in the following way.

When the band of the safety belt, coiled on the shaft 10, is extracted, the disk 11 rotates, so that the marks 21 pass the reading head 23. The reading head delivers a signal to the electric circuit 18 for each mark passing the reading head. These signals indicate the instantaneous position of the teeth on the wheel in relation to the point where the latch 14 with the tip 15 enters into the path traversed by the teeth. The electric circuit 18 is designed to interrupt the supply of current to the solenoid 16, so that the spring 17 can move the tip 15 of the latch 14 into the path traversed by the teeth 13 to lock the shaft 10 at a moment when the point of the latch may enter into the path traversed by the stop teeth and enter directly into a space between two teeth of the wheel, provided that the vehicle sensitive inertia body is in its locking position. In this way, when the latch is activated it will always enter in a space between two successive teeth, so that the risk that the latch, as it engages the toothed wheel, will hit the top of a tooth and bounce back outwardly is completely eliminated. Such a bouncing would cause a delay in the locking of the shaft, so that a longer length of band will be uncoiled from the shaft before locking is effected, thus reducing the security for the person embraced by the safety belt.

Also the reading head 26 will deliver signals to the electric circuit 18, when the disk 11 rotates. The reading head delivers a signal to the electric circuit for each mark 24 passing the reading head. The time interval between two successive signals from the reading head indicates the rotary speed of the shaft and is consequently a measure of the speed of extraction of the band. The difference between two successive time intervals indicates whether the band is being accelerated or retarded. The time intervals and the differences between them can easily be determined in the electric circuit 18. The circuit can be provided with electronic and logic circuits to indicate that the speed or the acceleration of the band has reached a value above a predetermined limit value and that the shaft has to be locked as rapidly as possible. The supply of current to the solenoid 16 can then be interrupted by the electric circuit, as soon as the latch can enter into the path traversed by the teeth at a space between two successive teeth.

The electric circuit 18 can be designed by persons skilled in the art on the basis of given specifications and has therefore not been shown in detail on the drawing.

While only one embodiment has been described above and shown many variations and modifications are possible. The synchronisation marks can preferably be designed in such a way that they indicate the beginning as well as the end of a region where the locking means may be entered into the path traversed by the stop teeth without directly engaging a tooth. This can be achieved by two separate marks or by one mark which is so shaped that the reading head senses the beginning as well as the end of the mark. There is no need to place the marks on a separate disk attached to the shaft, and the marks may as well be placed directly on the shaft or on a separate sleeve which is then attached to the shaft. All the marks can also be positioned on the same circle, so that the same reading head can be used for reading marks of different types, i.e. synchronisation marks as well as speed and acceleration marks, so that the required space is reduced. Also marks readable by non-optical or nonmagnetic methods can be used. The marks can also be arranged to be read with a lead time corresponding to the time required for activating the locking means and moving its engaging end to the path traversed by the stop teeth, so that the locking means can be entered into the path traversed by the stop teeth at any time during the whole space interval between two stop teeth.

## Claims

1. A device for the accurate time control or synchronisation of a locking means (14) in a vehicle safety belt having an extractable band which causes a rotatably mounted shaft (10) to rotate during the extraction of the band, the shaft being provided with a number of evenly spaced stop teeth (13) and the locking means (14) being adapted to be moved into the path traversed by the stop teeth in response to the operation of a band and/or vehicle sensitive means (20) to engage with one of the stop teeth of the shaft for locking the shaft, so that the band of the safety belt can not be extracted, characterised in that the rotatably mounted shaft (10) is provided with a sequence of marks (21) which are equally spaced from each other along a circle (22) concentric with the shaft (10) and which are arranged to be read by a reading head (23) during the rotation of the shaft, and that an electric circuit (18) is provided adapted to receive signals from the reading head (23) to enable activation of the locking means only at the times when the point where the locking means is to be entered into the path traversed by the stop teeth (13) lies in a space between two stop teeth, so that the locking means (14) when activated always enters into a space between two successive stop teeth.

2. A device according to Claim 1, characterised in that the shaft (10) is provided with at least one mark (21) for each space between the stop teeth (13) of the shaft.

3. A device according to Claim 2, characterised in that the shaft (10), for each space between the stop teeth (13) of the shaft, is provided with a mark indicating when the beginning of the space passes the point where the locking means (14) is to be entered into the path traversed by the stop teeth and a mark indicating when the end of the space passes the entering point.

4. A device according to any one of Claims 1 to 3, characterised in that the marks (21) are arranged on a disk (11) rigidly attached to the rotatably mounted shaft (10).

5. A device according to any one of Claims 1 to 3, characterised in that the marks are provided on the rotatably mounted shaft.

6. A device according to any one of the preceding claims, characterised in that the marks (21) are formed by areas having permanent magnetization.

7. A device according to any one of Claims 1 to 5, characterised in that the marks (21) are formed by areas that are optically readable.

8. A device according to Claim 6 or 7, characterised in that the marks (21) have an extension along the path traversed by the teeth corresponding to the space between two adjacent stop teeth (13) and that the reading head (23) is arranged to sense the beginning and the end of the marks.

9. A device according to any one of the preceding claims, characterised in that the marks (21) are arranged to be read with a time lead corresponding to the time required to activate the locking means (14) and to move its engagement end (15) to the path traversed by the stop teeth (13), so that the locking means (14) can be entered into the path traversed by the stop teeth and into the space between two stop teeth (13).

10. A device according to any one of the preceding claims, characterised in that the rotatably mounted shaft (10) is provided with further marks (24) arranged to be read by a reading head (26) for indicating the rotary speed and/or acceleration of the rotatably mounted shaft (10).

## Patentansprüche

1. Einrichtung für eine genaue Zeitsteuerung oder Synchronisation von Verriegelungselementen (40) bei einem Fahrzeugsicherheitsgurt, mit einem herausziehbaren Band, welches bewirkt, dass eine drehbar angebrachte Welle (10) sich während des Herausziehens des Bandes dreht, wobei die Welle mit einer Anzahl von gleich beabstandeten Stopzähnen (13) versehen ist und die Verriegelungselemente (14) geeignet sind, in den Weg bewegt zu werden, der durch die Stopzähne durchquert wird, in Reaktion auf die Betätigung eines Bandes und/oder von Fahrzeug-Sensitivelementen (20), um mit einem der Stopzähne der Welle zusammenzuwirken, zur Verriegelung der Welle, so dass das Band des Sicherheitsgurtes nicht herausgezogen werden kann, dadurch gekennzeichnet, dass die drehbar angebrachte Welle (10) mit einer Abfolge von Markierungen (21) versehen ist, welche gleich voneinander beabstandet sind entlang einem Kreis (22), konzentrisch mit der Welle (10), und welche so angeordnet sind, dass sie durch einen Lesekopf (23) gelesen werden während der Drehung der Welle, und dass eine elektrische Schaltung (18) vorgesehen ist, die geeignet ist, Signale von dem Lesekopf (23) zu empfangen, um eine Aktivierung der Verriegelungselemente nur zu den Zeiten zu ermöglichen, wenn der Punkt, wenn die Verriegelungselemente in den Weg eintreten, der durch die Stopzähne (13) durchsetzt wird, in einem Raum zwischen zwei Stopzähnen liegt, so dass die Verriegelungselemente (14), wenn aktiviert, jeweils in einen Zwischenraum zwischen zwei aufeinanderfolgende Stopzähne eindringen.

2. Vorrichtung nach Anspruch 1, dadurch gekennzeichnet, dass die Welle (10) mit zumindest einer Markierung (21) für jeden Zwischenraum zwischen den Stopzähnen (13) der Welle versehen ist.

3. Vorrichtung nach Anspruch 2, dadurch gekennzeichnet, dass die Welle (10) für jeden Zwischenraum zwischen den Stopzähnen (13) der Welle mit einer Markierung versehen ist, welche anzeigt, wenn der Beginn des Zwischenraumes an den Punkt sich vorbeibewegt, an dem die Verriegelungselemente (14) in den Weg eintreten, der durch die Stopzähne durchsetzt wird, und dass eine Markierung vorgesehen ist, die anzeigt, wenn das Ende des Zwischenraumes an dem Eindringpunkt vorbeigeht.

4. Vorrichtung nach einem der Ansprüche 1-3, dadurch gekennzeichnet, dass die Markierungen (21) an einer Scheibe (11) angeordnet sind, die starr an der drehbar angebrachten Welle (10) angebracht ist.

5. Vorrichtung nach einem der Ansprüche 1-3, dadurch gekennzeichnet, dass die Markierungen an der drehbar angebrachten Welle vorgesehen sind.

6. Vorrichtung nach einem der vorstehenden Ansprüche, dadurch gekennzeichnet, dass die Markierungen (21) durch Flächen gebildet sind, welche eine Permanentmagnetisierung besitzen.

7. Vorrichtung nach einem der Ansprüche 1-5, dadurch gekennzeichnet, dass die Markierungen (21) durch Flächen gebildet sind, die optisch lesbar sind.

8. Vorrichtung nach einem der Ansprüche 6 oder 7, dadurch gekennzeichnet, dass die Markierungen (21) eine Erstreckung entlang dem Weg, der durch die Zähne durchsetzt wird, besitzen, welche dem Zwischenraum zwischen zwei aneinandergrenzenden Stopzähnen (13) entspricht, und dass der Lesekopf (23) angeordnet ist, den Beginn und das Ende der Markierungen zu erfassen.

9. Vorrichtung nach einem der vorstehenden Ansprüche, dadurch gekennzeichnet, dass die Markierungen (21) so angeordnet sind, dass sie mit einem Zeitvorsprung zu lesen sind, welcher der Zeit entspricht, die erforderlich ist, um die Verriegelungselemente (14) zu aktivieren und deren Zusammenwirkungsende (15) in den Weg zu bewegen, der durch die Stopzähne (13) durchsetzt wird, so dass die Verriegelungselemente (14) in den Weg eindringen können, der durch die Stopzähne durchsetzt wird, und in den Raum zwischen den zwei Stopzähnen (13).

10. Vorrichtung nach einem der vorstehenden Ansprüche, dadurch gekennzeichnet, dass die drehbar angebrachte Welle (10) mit weiteren Markierungen (24) versehen ist, die so angeordnet sind, dass sie durch einen Lesekopf (26) zu lesen sind, um die Drehgeschwindigkeit und/oder die Beschleunigung der drehbar angebrachten Welle (10) anzuzeigen.

## Revendications

1. Dispositif de commande temporelle ou de synchronisation précise d'un moyen de verrouillage (14) dans une ceinture de sécurité pour véhicule présentant un ruban déroulable qui provoque, lors du déroulement de ce ruban, la rotation d'un axe (10) monté rotatif, cet axe étant muni d'un certain nombre de dents d'arrêt équidistantes (13), et le moyen de verrouillage (14) étant conçu pour être amené dans la trajectoire parcourue par les dents d'arrêt, en réaction à l'actionnement d'un moyen détecteur (20) associé au ruban et/ou au véhicule, afin de venir en prise avec l'une des dents d'arrêt de l'axe pour verrouiller cet axe, de telle sorte que le ruban de la ceinture de sécurité ne puisse pas être déroulé, caractérisé par le fait que l'axe (10) monté rotatif est pourvu d'une succession de repères (21) qui sont mutuellement espacés de distances égales le long d'un cercle (22) concentrique à l'axe (10), et qui sont destinés à être lus par une tête de lecture (23) pendant la rotation de l'axe; et par le fait qu'il est prévu un circuit électrique (18) destiné à recevoir des signaux provenant de la tête de lecture (23), de façon à permettre une activation du moyen de verrouillage seulement aux instants auxquels le point où le moyen de verrouillage doit pénétrer dans la trajectoire parcourue par les dents d'arrêt (13) se trouve dans un intervalle entre deux dents d'arrêt, si bien que le moyen de verrouillage (14), lorsqu'il est activé, pénètre toujours dans un intervalle entre deux dents d'arrêt successives.

2. Dispositif selon la revendication 1, caractérisé par le fait que l'axe (10) est doté d'au moins un repère (21) pour chaque intervalle entre les dents d'arrêt (13) de cet axe.

3. Dispositif selon la revendication 2, caractérisé par le fait que, pour chaque intervalle entre les dents d'arrêt (13) de l'axe, cet axe (10) est muni d'un repère indiquant l'instant auquel le début de l'intervalle franchit le point où le moyen de verrouillage (14) doit pénétrer dans la trajectoire parcourue par les dents d'arrêt, ainsi que d'un repère indiquant l'instant auquel la fin de l'intervalle franchit le point de pénétration.

4. Dispositif selon l'une quelconque des revendications 1 à 3, caractérisé par le fait que les repères (21) sont agencés sur un disque (11) fixé rigidement à l'axe (10) monté rotatif.

5. Dispositif selon l'une quelconque des revendications 1 à 3, caractérisé par le fait que les repères sont ménagés sur l'axe monté rotatif.

6. Dispositif selon l'une quelconque des revendications précédentes, caractérisé par le fait que les repères (21) sont formés par des régions à magnétisation permanente.

7. Dispositif selon l'une quelconque des revendications 1 à 5, caractérisé par le fait que les repères (21) sont formés par des régions pouvant être lues optiquement.

8. Dispositif selon la revendication 6 ou 7, caractérisé par le fait que les repères (21) comportent, le long de la trajectoire parcourue par les dents, un prolongement correspondant à l'intervalle entre deux dents d'arrêt adjacentes (13); et par le fait que la tête de lecture (23) est conçue pour détecter le début et la fin des repères.

9. Dispositif selon l'une quelconque des revendications précédentes, caractérisé par le fait que les repères (21) sont destinés à être lus avec une marge de temps correspondant au temps nécessaire pour activer le moyen de verrouillage (14) et pour amener son extrémité de venue en prise (15) jusqu'à la trajectoire parcourue par les dents d'arrêt (13), de telle sorte que le moyen de verrouillage (14) puisse pénétrer dans la trajectoire parcourue par les dents d'arrêt et dans l'intervalle entre deux dents d'arrêt (13).

10. Dispositif selon l'une quelconque des revendications précédentes, caractérisé par le fait que l'axe (10) monté rotatif est doté de repères supplémentaires (24) destinés à être lus par une tête de lecture (26), pour indiquer la vitesse de rotation et/ou l'accélération de l'axe (10) monté rotatif.